# EUROPEAN PATENT SPECIFICATION

(11) **EP 4 368 328 B1**
(45) Date of publication and mention of the grant of the patent: **11.06.2025**
(21) Application number: 23197697.8
(22) Date of filing: 15.09.2023
(51) Int. Cl.: B23K 11/30

(54) **WELD TIP REMOVER**
VORRICHTUNG ZUM ENTFERNEN VON SCHWEISSELEKTRODENKAPPEN
DISPOSITIF D'ENLÈVEMENT D'EMBOUTS D'ELECTRODE

(30) Priority: 08.11.2022 KR 20220147811
(43) Date of publication of application: 15.05.2024
(73) Proprietor: Korea T&M Co., Ltd, Ulju-gun Ulsan 44953 (KR); Lee, Seung Hae, Ulju-Gun Ulsan 44903 (KR)
(72) Inventor: Lee, Seung Hae, 44903 Ulju-gun (KR); Song, Du Hyun, 44924 Ulju-gun (KR); Lee, Dong Gil, 44950 Ulju-gun (KR)
(74) Representative: Patentanwaltskanzlei Matschnig & Forsthuber OG

(56) References cited:
- EP-A2- 0 200 162
- FR-B1- 2 870 149

## Description

The invention relates to a device for removing a weld tip used in spot welding.

A weld tip remover is a device of a weld tip exchanger, which removes a used weld tip before a new weld tip is combined with a shank.

### Description of Background Art

Korean Patent Publication KR 10-1310291 B1 (September 24, 2013) discloses an example of a weld tip remover of a weld tip exchanger. Document EP0200162 discloses a weld tip remover comprising: a cylindrical tubular case a rotating plate axially rotatably mounted inside the cylindrical tubular case defining a tip receiving hole formed through an inner circumferential surface thereof; and a hinge bar having one end hinged to a translational actuator, a body portion hinged to one side of the rotating plate, and another end at which a driving jaw exposed to one side of an inner circumferential surface of the rotating plate is provided.

### Summary of the Invention

Therefore, the present invention has been made in view of the above problems, and it is an object of the invention to provide a weld tip remover for improving work efficient for removing a weld tip from a shank and preventing the shank and the weld tip from being bent during a weld tip removal process.

In accordance with the invention, the above and other objects can be accomplished by the provision of a weld tip remover according to a first embodiment including a cylindrical tubular case with an inclined guide groove formed therein along a circumference of a tube wall, a rotating plate axially rotatably mounted inside the cylindrical tubular case by a guide bar provided on an outer circumferential surface thereof and inserted into the inclined guide groove, and defining a tip receiving hole formed through an inner circumferential surface thereof, and a hinge bar having one end hinged to a translational actuator, a body portion hinged to one side of the rotating plate, and another end at which a driving jaw exposed to one side of an inner circumferential surface of the rotating plate is provided.

In a weld tip remover according to a second embodiment, a first weld tip remover (first device) and a second weld tip remover (second device) may overlap in an axial direction, an inclined guide groove of the first device and an inclined guide groove of the second device may be inclined in opposite directions, and one end of a hinge bar of the first device and one end of a hinge bar of the second device may be hinged to the same translational actuator.

In a weld tip remover according to a third embodiment, a first weld tip remover (first device) and a second weld tip remover (second device) may be arranged side by side in a perpendicular direction to an axial direction, an inclined guide groove of the first device and an inclined guide groove of the second device may be inclined in opposite directions, and one end of a hinge bar of the first device and one end of a hinge bar of the second device may be hinged to the same translational actuator.

The weld tip remover according to the first to third embodiments may further include a block piece driven by rotation of the rotating plate and blocking at least a portion of an edge of the tip receiving hole at one end in an axial direction of the cylindrical tubular case.

In the weld tip remover according to the first to third embodiments, the inclined guide groove may include a first region parallel to a circumference direction of the cylindrical tubular case and a second region inclined with respect to the circumference direction of the cylindrical tubular case.

### Short Description of the Drawings

The above and other objects, features and other advantages of the invention will be more clearly understood from the following detailed description taken in conjunction with the accompanying drawings, in which:
Fig. 1 is a perspective view of a weld tip remover according to a first embodiment;
Fig. 2 is an exploded view of the weld tip remover according to the first embodiment;
Fig. 3 is a cross-sectional view of a use example of the weld tip remover according to the first embodiment;
Fig. 4 is a perspective view of a use example of the weld tip remover according to the first embodiment;
Fig. 5 is a perspective view of a weld tip remover according to a second embodiment;
Fig. 6 is an exploded view of the weld tip remover according to the second embodiment;
Fig. 7 is a cross-sectional view of a use example of the weld tip remover according to the second embodiment;
Fig. 8 is a perspective view of a weld tip remover according to a third embodiment; and
Fig. 9 is an exploded view of the weld tip remover according to a third embodiment.

### Detailed Description of Embodiments

The invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements

With reference to the drawings, weld tip removers 100, 100', and 100' according to first to third embodiments will be described in detail.

### Weld tip remover 100 according to first embodiment

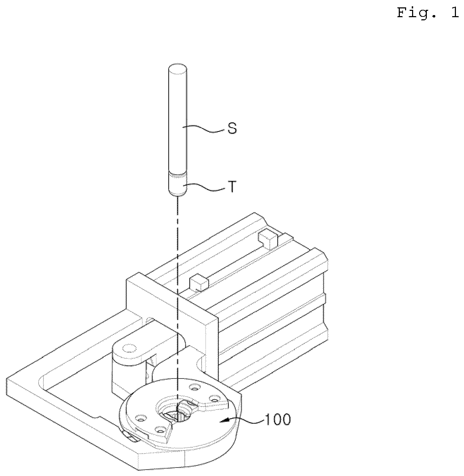

With reference to Figs. 1 to 4, the weld tip remover 100 according to the first embodiment (hereinafter referred to as 'the weld tip remover 100') will be described in detail.

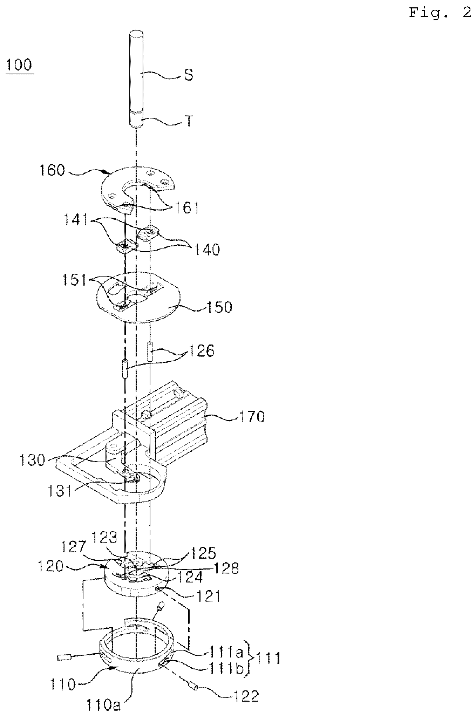

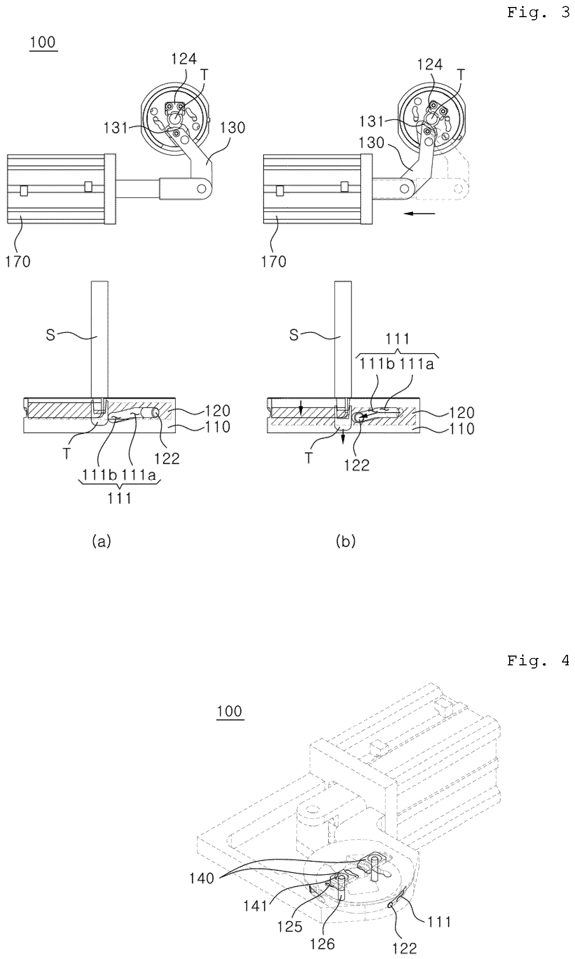

Fig. 1 is a perspective view of the weld tip remover 100. Fig. 2 is an exploded view of the weld tip remover 100. Fig. 3 is a cross-sectional view of a use example of the weld tip remover 100. Fig. 4 is a perspective view of a use example of the weld tip remover 100.

Referring to Figs. 1 and 2, the weld tip remover 100 includes a cylindrical tubular case 110, a rotating plate 120, and a hinge bar 130.

The cylindrical tubular case 110 has a certain height, and an inclined guide groove 111 is formed along a circumference of a tube wall 110a.

The inclined guide groove 111 is formed obliquely along the circumference of the tube wall 110a. Here, the meaning of 'inclined' does not mean that a tangent line at all points in an entire section from a start point to an end point is inclined, but means that a straight line connecting the start point and the end point is inclined. In detail, the inclined guide groove 111 may include a first region 111a that extends in parallel to the circumference of the tube wall 110a and a second region 111b that extends from the first region 111a to be inclined with respect to the circumference of the tube wall 110a.

The rotating plate 120 is provided on an inner circumferential surface of the cylindrical tubular case 110 and includes a guide bar 122 and a tip receiving hole 123.

A side groove 121 accommodating one end of the guide bar 122 may be formed on an outer circumferential surface of the rotating plate 120.

One end of the guide bar 122 is accommodated in the side groove 121 of the rotating plate 120, and the other end is accommodated in the inclined guide groove 111. Thus, the rotating plate 120 is rotatably coupled inside the cylindrical tubular case 110.

Although the inclined guide groove 111 is shown as being formed through the tube wall 110a according to an embodiment, the inclined guide groove 111 may be a groove that does not penetrate an inner circumferential surface of the cylindrical tubular case 110, and the guide bar 122 may be a ball plunger that is installed on an outer circumferential surface of the rotating plate 120 and is elastically deformed in and out of a radial direction of the rotating plate 120.

The tip receiving hole 123 is formed through the center of the rotating plate 120 such that an inner circumferential surface of the rotating plate 120 defines the tip receiving hole 123.

The rotating plate 120 may include a fixed jaw 124 exposed inside the tip receiving hole 123. The fixed jaw 124 fixes a weld tip T together with a driving jaw 131 to be described later.

The hinge bar 130 has one end hinged to a translational actuator 170 and a body portion hinged to one side of the rotating plate 120.

The driving jaw 131 exposed to one side of the inner circumferential surface of the rotating plate 120 is provided at the other end of the hinge bar 130.

As the body portion of the hinge bar 130 is rotated at a predetermined angle by driving of the translational actuator 170, the driving jaw 131 protrudes toward the center of the tip receiving hole 123.

With reference to Fig. 3, a process of removing the weld tip T by the weld tip remover 100 will be described in detail.

In an initial state of the weld tip remover 100, the guide bar 122 is located at an end of the first region 111a of the inclined guide groove 111. In detail, the guide bar 122 is located on an opposite side to a portion in which the first region 111a and the second region 111b are connected to each other.

When the weld tip T is inserted into the tip receiving hole 123, the translational actuator 170 is driven.

In the weld tip remover 100, when the translational actuator 170 is driven, the hinge bar 130 rotates and the driving jaw 131 at the other end of the hinge bar 130 protrudes toward the center of the tip receiving hole 123. In this case, the driving jaw 131 fixes the weld tip T together with the fixed jaw 124.

When the hinge bar 130 rotates to an extent that the driving jaw 131 fixes the weld tip T together with the fixed jaw 124, the hinge bar 130 comes into contact with a flange 127 provided on the rotating plate 120, and thus rotation of the hinge bar 130 relative to the rotating plate 120 is stopped.

Then, rotation of the hinge bar 130 by the translational actuator 170 rotates the rotating plate 120 in the cylindrical tubular case 110.

Although the case in which rotation of the hinge bar 130 with respect to the rotating plate 120 is stopped by the flange 127 has been described according to an embodiment, the hinge bar 130 may rotate to the extent that the driving jaw 131 fixes the weld tip T together with the fixed jaw 124 without the flange 127, and then as the fixed jaw 124 rotates together with the hinge bar 130, the rotating plate 120 integrated with the fixed jaw 124 may also rotate together.

In this case, the guide bar 122 of the rotating plate 120 is moved in the order of the first region 111a and the second region 111b in the inclined guide groove 111. In detail, the first region 111a extends parallel to a circumference of the tube wall 110a, the rotating plate 120 rotates along the guide bar 122 without changing a height thereof. Accordingly, the driving jaw 131 fixes the weld tip T together with the fixed jaw 124.

Then, the second region 111b extends obliquely to the circumference of the tube wall 110a, the rotating plate 120 rotates the guide bar 122 in a circumference direction of the cylindrical tubular case 110 and simultaneously is moved in an axial direction. Accordingly, the weld tip T moves together with the rotating plate 120 and is removed from a shank S. That is, while the rotating plate 120 rotates along the guide bar 122 without changing the height, the driving jaw 131 grips the weld tip T inserted into the shank S, and then while the rotating plate 120 moves in the axial direction, the weld tip T is completely removed from the shank S. Accordingly, the weld tip remover 100 rotates both sides of the weld tip T while fixing the weld tip T, and thus the shank S and the weld tip T may not be bent and the weld tip T may be removed from the shank S.

The weld tip remover 100 may further include a ball plunger 128 disposed in the tip receiving hole 123, and the ball plunger 128 pushes the weld tip T out of the tip receiving hole 123, and thus the weld tip T may be induced to smoothly move downward.

Referring to Fig. 2, the weld tip remover 100 may include a first cover 150, a second cover 160, and a block piece 140 that is inserted between the weld tip T and the shank S when the weld tip T is inserted into the tip receiving hole 123.

The first cover 150 may be disposed above the cylindrical tubular case 110 to cover an upper surface of the cylindrical tubular case 110. The first cover 150 may include a first block piece receiver 151 that accommodates a lower portion of the block piece 140 and provides a path through which the block piece 140 is withdrawn towards the tip receiving hole 123.

The second cover 160 may be disposed above the first cover 150 to cover an upper surface of the first cover 150. The second cover 160 may include a second block piece receiver 152 that accommodates an upper portion of the block piece 140 and provides a path through which the block piece 140 is withdrawn towards the tip receiving hole 123.

The block piece 140 may be disposed between the first block piece receiver 151 of the first cover 150 and the second block piece receiver 152 of the second cover 160 and may block at least a part of an edge of the tip receiving hole 123 when the block piece 140 is withdrawn toward the tip receiving hole 123.

The weld tip remover 100 may include a rod 126 such that power is transferred to the block piece 140 from rotation of the rotating plate 120.

The rod 126 is disposed in a manner of successively passing through the rotating plate 120, the first cover 150, and the block piece 140.

A rod guide groove 125 is formed through the rotating plate 120 in an axial direction of the rotating plate 120. In detail, the rod guide groove 125 is obliquely formed through the center of the rotating plate 120 to move the rod 126 forward or backward.

In the first cover 150, a hole communicates with the rod guide groove 125 in the axial direction and is formed a long way through the rotating plate 120 in a radial direction thereof.

A rod receiving hole 141 communicating with the rod guide groove 125 and the hole of the first cover 150 is formed in the block piece 140. An end of the rod 126 is received in the rod receiving hole 141.

With reference to Fig. 4, an operation process of the block piece 140 of the weld tip remover 100 will be described in detail.

Referring to Fig. 4, when the translational actuator 170 is driven, the hinge bar 130 comes into contact with one side of the tip receiving hole 123 of the rotating plate 120, and thus the rotating plate 120 rotates in the cylindrical tubular case 110.

When the rotating plate 120 is rotated, the position of the rod guide groove 125 is changed, and the rod 126 is moved toward the tip receiving hole 123 along the rod guide groove 125.

The rod 126 is connected to the block piece 140, and thus when the block piece 140 is withdrawn toward the tip receiving hole 123 according to the position of the rod 126 and is inserted between the weld tip T and the shank S to remove the weld tip T in the axial direction, the shank S is prevented from moving in the axial direction. Similarly, when force is applied to the block piece 140 in a direction away from the tip receiving hole 123, the block piece 140 needs to be moved along the rod guide groove 125, and thus a direct load on the translational actuator 170 is reduced.

### Weld tip remover 100' according to second embodiment

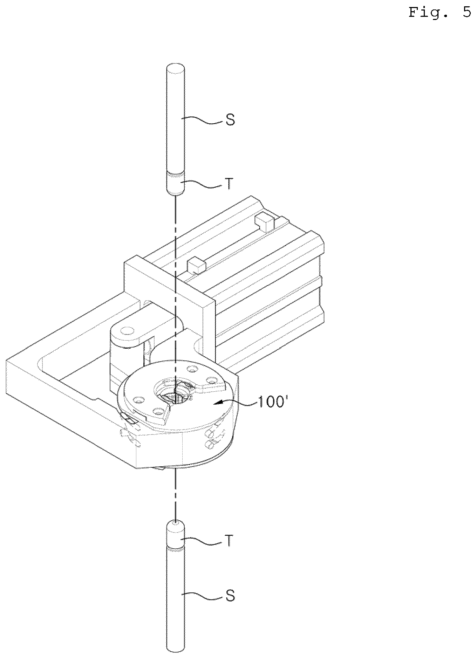

With reference to Figs. 5 to 7, the weld tip remover 100' according to a second embodiment (hereinafter referred to as 'the weld tip remover 100") will be described in detail. However, 'a cylindrical tubular case 110', a tube wall 110a', an inclined guide groove 111', a first region 111a', a second region 111b', a rotating plate 120', a side groove 121', a guide bar 122', a tip receiving hole 123', a fixed jaw 124', a rod guide groove 125', a rod 126', a hinge bar 130', a driving jaw 131', a block piece 140', a rod receiving hole 141', a first cover 150', a first block piece receiver 151', a second cover 160', and a second block piece receiver 161" has the same coupling structure as the aforementioned 'the cylindrical tubular case 110, the tube wall 110a, the inclined guide groove 111, the first region 111a, the second region 111b, the rotating plate 120, the side groove 121, the guide bar 122, the tip receiving hole 123, the fixed jaw 124, the rod guide groove 125, the rod 126, the hinge bar 130, the driving jaw 131, the block piece 140, the rod receiving hole 141, the first cover 150, the first block piece receiver 151, the second cover 160, and a second block piece receiver 161' and a coupling direction is changed up and down, and thus a description of the shape and coupling relationship will be omitted.

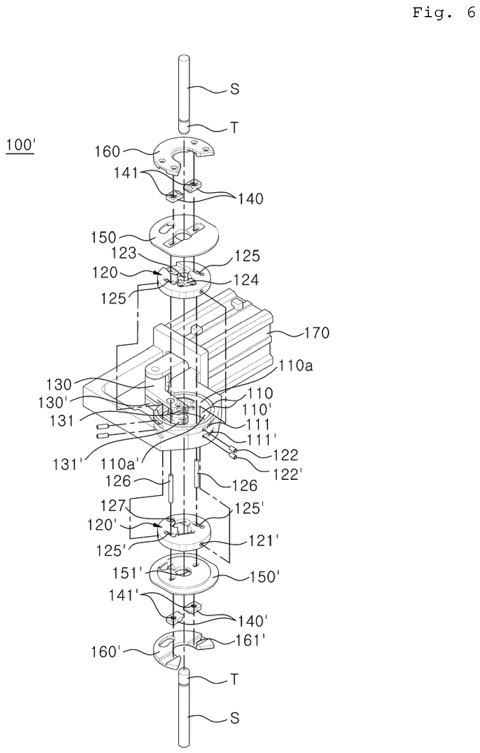

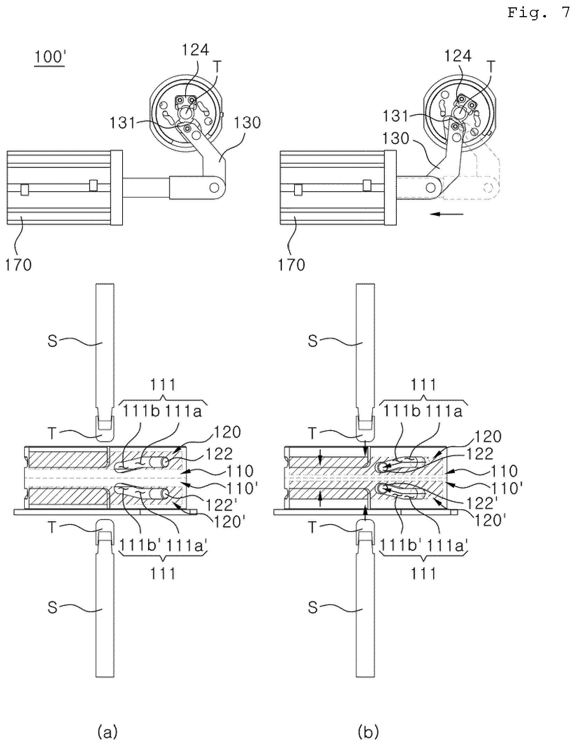

Fig. 5 is a perspective view of the weld tip remover 100'. Fig. 6 is an exploded view of the weld tip remover 100'. Fig. 7 is a cross-sectional view of a use example of the weld tip remover 100'.

Referring to Figs. 5 to 6, the weld tip remover 100' may move the hinge bars 130 and 130', the rotating plates 120 and 120', and the block pieces 140 and 140' by using one translational actuator 170 and remove the weld tip T inserted from above and the weld tip T inserted from below.

Referring to Fig. 6, the cylindrical tubular cases 110 and 110' overlap each other, the inclined guide groove 111 of the cylindrical tubular case 110 located on an upper side is inclined downward, and the inclined guide groove 111' of the cylindrical tubular case 110' located on a lower side is disposed inclined upward. In detail, the inclined guide groove 111' of the cylindrical tubular case 110' located at the lower side may include the first region 111a' that extends in a circumference direction of the tube wall 110a' and the second region 111b' that extends upward based on an axial direction of the cylindrical tubular case 110'. For reference, in a state in which the driving jaws 131 and 131' are in contact with the weld tip T, the rotating plates 120 and 120' are rotated by the hinge bars 130 and 130', but the rotating plate 120 disposed at the upper side is moved downward based on the axial direction of the cylindrical tubular case 110, and the rotating plate 120' disposed at the lower side is moved upward based on the axial direction of the cylindrical tubular case 110'.

Accordingly, to remove the weld tip T from the weld tip remover 100', the weld tip T that descends may be inserted into the tip receiving hole 123 located at the upper side, and the weld tip T that ascends may be inserted into the tip receiving hole 123' located at the lower side.

The weld tip remover 100' may remove the ascending and descending weld tip T after sequentially accommodating the ascending and descending weld tip T. However, the order of removing the ascending and descending weld tip T using the weld tip remover 100' is not limited.

Referring to Fig. 7, a process of removing the weld tip T of 'the cylindrical tubular case 110, the tube wall 110a, the inclined guide groove 111, the first region 111a, the second region 111b, the rotating plate 120, the side groove 121, the guide bar 122, the tip receiving hole 123, the fixed jaw 124, the hinge bar 130, and the driving jaw 131' located at the upper side is the same as the above description, and thus a description thereof is omitted, and a process of removing the weld tip T of 'the cylindrical tubular case 110', the tube wall 110a', the inclined guide groove 111', the first region 111a', the second region 111b', the rotating plate 120', the side groove 121', the guide bar 122', the tip receiving hole 123', the fixed jaw 124', the hinge bar 130', and the driving jaw 131" located at the lower side will be described.

When the weld tip T is inserted into the tip receiving hole 123', the translational actuator 170 is driven.

In the weld tip remover 100', when the translational actuator 170 is driven, the hinge bar 130' rotates based on one side of the rotating plate 120', and the driving jaw 131' rotates toward the center of the tip receiving hole 123'. In this case, the driving jaw 131' may fix the weld tip T together with the fixed jaw 124', and eventually the driving jaw 131' may not protrude toward the center of the rotating plate 120'.

With the driving jaw 131' in contact with the weld tip T, the hinge bar 130' rotates the rotating plate 120' in the cylindrical tubular case 110'. In this case, the guide bar 122' of the rotating plate 120' moves in the order of the first region 111a' and the second region 111b' in the inclined guide groove 111'. In detail, the first region 111a' extends parallel to the circumference of the tube wall 110a', and thus the rotating plate 120' rotates along the guide bar 122' without changing the height thereof. Accordingly, the driving jaw 131 fixes the weld tip T together with the fixed jaw 124.

Then, the second region 111b' extends obliquely upward from the circumference of the tube wall 110a', and thus the rotating plates 120 and 120' rotate the guide bar 122' in the circumference direction of the cylindrical tubular case 110' and at the same time rotate the cylindrical tubular case 110' is moved upward relative to the axial direction thereof. As a result, the weld tip T moves upward based on the shank S and is separated from the shank S.

The weld tip remover 100 may further include the ball plunger 128 disposed in the tip receiving hole 123, and the ball plunger 128 pushes the weld tip T out of the tip receiving hole 123, and thus the weld tip T may be induced to smoothly move downward.

Referring to Figs. 4 and 6, a process of operating the block pieces 140 and 140' of 'the cylindrical tubular case 110, the tube wall 110a, the inclined guide groove 111, the first region 111a, the second region 111b, the rotating plate 120, the side groove 121, the guide bar 122, the tip receiving hole 123, the fixed jaw 124, the rod guide groove 125, the rod 126, the hinge bar 130, the driving jaw 131, the block piece 140, the rod receiving hole 141, the first cover 150, the first block piece receiver 151, the second cover 160, and the second block piece receiver 161' located at the upper side is the same as the above description, and thus a detailed description thereof is omitted, and a process of operating the block piece 140' of 'the cylindrical tubular case 110', the tube wall 110a' the inclined guide groove 111', the first region 111a', the second region 111b', the rotating plate 120', the side groove 121', the guide bar 122', the tip receiving hole 123', the fixed jaw 124', the rod guide groove 125', the rod 126, the hinge bar 130', the driving jaw 131', the block piece 140', the rod receiving hole 141', the first cover 150', the first block piece receiver 151', the second cover 160', and the second block piece receiver 161" located at the lower side will be described.

Referring to Figs. 4 and 6, when the weld tip T is inserted into the tip receiving hole 123', the translational actuator 170 is driven.

When the rotating plate 120' rotates, the position of the rod guide groove 125' is changed, and the rod 126 is moved toward the tip receiving hole 123' along the rod guide groove 125'.

The rod 126 is connected to the block piece 140', and thus when the block piece 140' is withdrawn toward the tip receiving hole 123' depending on the position of the rod 126, and is inserted between the weld tip T and the shank S to remove the weld tip T in an axial direction, the shank S may not move in the axial direction.

### Weld tip remover 100' according to third embodiment

With reference to Figs. 6, 8, and 9, the weld tip remover 100" according to a third embodiment (hereinafter referred to as 'the weld tip remover 100‴) will be described in detail. However, 'the cylindrical tubular cases 110 and 110', the tube walls 110a and 110a', the inclined guide grooves 111 and 111', the first regions 111a and 111a', the second regions 111b and 111b', the rotating plates 120 and 120', the side grooves 121 and 121, the guide bars 122 and 122', the tip receiving holes 123 and 123', the fixed jaws 124 and 124', the rod guide grooves 125 and 125', the rods 126 and 126', the hinge bars 130 and 130', the driving jaws 131 and 131', the block pieces 140 and 140', the rod receiving holes 141 and 141', the first covers 150 and 150', the first block piece receivers 151 and 151', the second covers 160 and 160', and the second block piece receivers 161 and 161' of the weld tip remover 100" has the same arrangement and coupling structure as 'the cylindrical tubular cases 110 and 110', the tube walls 110a and 110a', the inclined guide grooves 111 and 111', the first regions 111a and 111a', the second regions 111b and 111b', the rotating plates 120 and 120', the side grooves 121 and 121, the guide bars 122 and 122', the tip receiving holes 123 and 123', the fixed jaws 124 and 124', the rod guide grooves 125 and 125', the rods 126 and 126', the hinge bars 130 and 130', the driving jaws 131 and 131', the block pieces 140 and 140', the rod receiving holes 141 and 141', the first covers 150 and 150', the first block piece receivers 151 and 151', the second covers 160 and 160', and the second block piece receivers 161 and 161' of the aforementioned weld tip remover 100', and thus a detailed description thereof will be omitted.

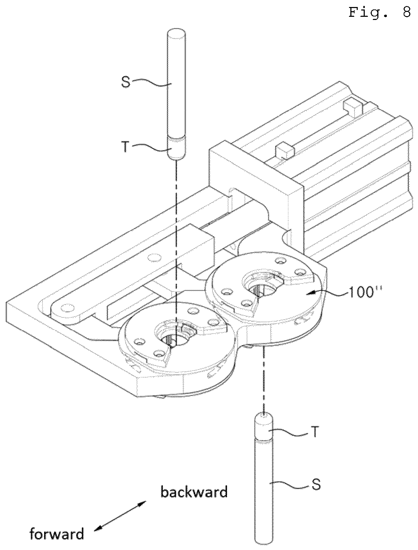

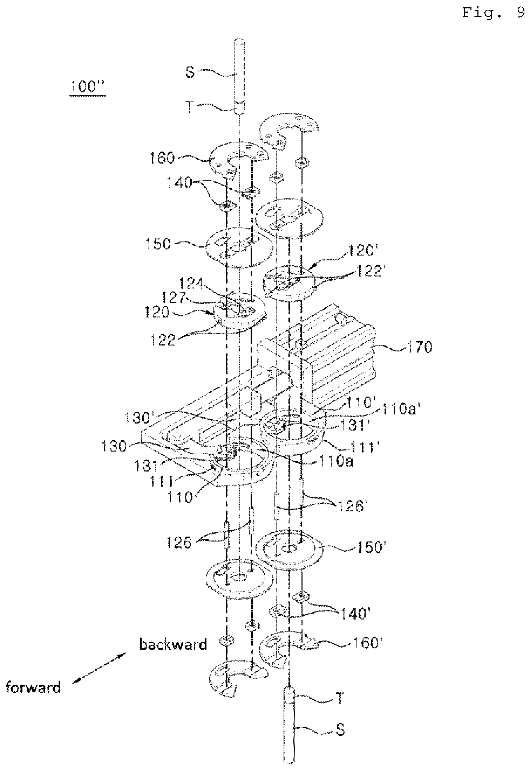

Fig. 8 is a perspective view of the weld tip remover 100". Fig. 9 is an exploded view of the weld tip remover 100".

Referring to Figs. 8 and 9, the weld tip remover 100" may remove the weld tip T inserted into the tip receiving hole 123 located at a front side and the weld tip T inserted into the tip receiving hole 123' located at a rear side by moving the hinge bars 130 and 130', the rotating plates 120 and 120', and the block pieces 140 and 140' using one translational actuator 170.

Referring to Fig. 9, the cylindrical tubular cases 110 and 110' are arranged side by side on the front and rear sides, the inclined guide groove 111 of the cylindrical tubular case 110 located on the front side is inclined downward, and the inclined guide groove 111' of the cylindrical tubular case 110' located at the rear side is inclined upward. In detail, the inclined guide groove 111 of the cylindrical tubular case 110 located at the front side may include the first region 111a extending in a circumference of the tube wall 110a and the second region 111b extending downward based on an axial direction of the cylindrical tubular case 110. The inclined guide groove 111' of the cylindrical tubular case 110' located at the rear side may include the first region 111a' extending in a circumference of the tube wall 110a' and the second region 111b' extending upward based on an axial direction of the cylindrical tubular case 110'.

For reference, in a state in which each of the driving jaws 131 and 131' is in contact with the weld tip T, each of the two rotating plates 120 and 120' is rotated in a direction relative to an axis by each of the hinge bars 130 and 130', but the rotating plate 120 disposed on the front side is moved downward, and the rotating plate 120' disposed on the rear side is moved upward.

Thus, the descending weld tip T may be inserted into the tip receiving hole 123 located at the front side, and the ascending weld tip T may be inserted into the tip receiving hole 123' located at the rear side.

Referring to Figs. 8 and 9, the weld tip remover 100" may simultaneously accommodate and remove the ascending and descending weld tips T. However, when the ascending and descending weld tips T are sequentially accommodated in any one of the tip receiving holes 123 and 123', the order of removing the ascending and descending weld tips T using the weld tip remover 100" is not limited.

Referring to Figs. 4, 6, and 9, a process of removing the weld tip T of 'the cylindrical tubular case 110, the inclined guide groove 111, the first region 111a, the second region 111b, the rotating plate 120, the side groove 121, the guide bar 122, the tip receiving hole 123, the fixed jaw 124, the hinge bar 130, and the driving jaw 131' located at the front side is the same as the process of removing the weld tip T of 'the cylindrical tubular case 110, the inclined guide groove 111, the first region 111a, the second region 111b, the rotating plate 120, the side groove 121, the guide bar 122, the tip receiving hole 123, the fixed jaw 124, the hinge bar 130, and the driving jaw 131' located at the upper side of the weld tip removers 100 and 100' according to the first or second embodiment.

A process of removing the weld tip T of 'the cylindrical tubular case 110', the inclined guide groove 111', the first region 111a', the second region 111b', the rotating plate 120', the side groove 121', the guide bar 122', the tip receiving hole 123', the fixed jaw 124', the hinge bar 130', and the driving jaw 131" located at the rear side is the same as the process of removing the weld tip T of 'the cylindrical tubular case 110', the inclined guide groove 111', the first region 111a', the second region 111b', the rotating plate 120', the side groove 121', the guide bar 122', the tip receiving hole 123', the fixed jaw 124', the hinge bar 130', the driving jaw 131" located at the lower side of the weld tip remover 100' according to the second embodiment.

Referring to Figs. 4, 6, and 9, a process of operating the block piece 140 of 'the cylindrical tubular case 110, the inclined guide groove 111, the first region 111a, the second region 111b, the rotating plate 120, the side groove 121, the guide bar 122, the tip receiving hole 123, the fixed jaw 124, the hinge bar 130, and the driving jaw 131' located at the front side is the same as a process of operating the block piece 140 of 'the cylindrical tubular case 110, the inclined guide groove 111, the first region 111a, the second region 111b, the rotating plate 120, the side groove 121, the guide bar 122, the tip receiving hole 123, the fixed jaw 124, the hinge bar 130, and the driving jaw 131' located at the upper side of the weld tip removers 100 and 100' according to the first or second embodiment.

A process of operating the block piece 140' of 'the cylindrical tubular case 110', the inclined guide groove 111', the first region 111a', the second region 111b', the rotating plate 120', the side groove 121', the guide bar 122', the tip receiving hole 123', the fixed jaw 124', the hinge bar 130', and the driving jaw 131" located at the rear side is the same as the process of operating the block piece 140' of 'the cylindrical tubular case 110', the inclined guide groove 111', the first region 111a', the second region 111b', the rotating plate 120', the side groove 121', the guide bar 122', the tip receiving hole 123', the fixed jaw 124', the hinge bar 130', and the driving jaw 131" located at the lower side of the weld tip remover 100" according to the second embodiment.

The weld tip remover 100" may remove the weld tip T through the cylindrical tubular case 110 in which one of the two spot welders is disposed at the front side and components combined therewith, and remove the weld tip T through the cylindrical tubular case 110' in which the other of the two spot welders is disposed at the rear side and the components combined therewith.

The weld tip remover according to an embodiment has a small number of parts and a simple structure, and thus there is no minor failure and high durability.

The weld tip remover according to an embodiment has a simple power transmission structure and excellent removal work efficiency.

As the weld tip remover according to an embodiment is configured not to apply force in a direction in which an axis of a shank and a weld tip is inclined, bending of the shank and the weld tip is prevented during a process of removing the weld tip.

The weld tip remover according to an embodiment has a simple structure and is easily maintained.

### LIST OF REFERENCE SYMBOLS

- 100, 100', 100": weld tip remover
- 110, 110': cylindrical tubular case
- 110a, 110a': tube wall
- 111, 111': inclined guide groove
- 111a, 111a': first region
- 111b, 111b': second region
- 120, 120': rotating plate
- 122, 122': guide bar
- 123, 123': tip receiving hole
- 125, 125': rod guide groove
- 126, 126': rod
- 130, 130': hinge bar
- 131, 131': driving jaw
- 140, 140': block piece
- 141, 141': rod receiving hole
- 170: translational actuator

## Claims

1. A weld tip remover comprising:
a cylindrical tubular case with an inclined guide groove formed therein along a circumference of a tube wall;
a rotating plate axially rotatably mounted inside the cylindrical tubular case by a guide bar provided on an outer circumferential surface thereof and inserted into the inclined guide groove, and defining a tip receiving hole formed through an inner circumferential surface thereof; and
a hinge bar having one end hinged to a translational actuator, a body portion hinged to one side of the rotating plate, and another end at which a driving jaw exposed to one side of an inner circumferential surface of the rotating plate is provided.

2. The weld tip remover according to claim 1, comprising a first weld tip remover according to claim 1 as a first device and a second weld tip remover according to claim 1 as a second device,
wherein the first and second devices overlap in an axial direction,
wherein an inclined guide groove of the first device and an inclined guide groove of the second device are inclined in opposite directions, and one end of a hinge bar of the first device and one end of a hinge bar of the second device are hinged to the same translational actuator.

3. The weld tip remover according to claim 1, comprising a first weld tip remover according to claim 1 as a first device and a second weld tip remover according to claim 1 as a second device,
wherein the first and second devices are arranged side by side in a perpendicular direction to an axial direction,
wherein an inclined guide groove of the first device and an inclined guide groove of the second device are inclined in opposite directions, and one end of a hinge bar of the first device and one end of a hinge bar of the second device are hinged to the same translational actuator.

4. The weld tip remover according to any one of claims 1 to 3, further comprising:
a block piece driven by rotation of the rotating plate and configured to block at least a portion of an edge of the tip receiving hole at one end in an axial direction of the cylindrical tubular case.

5. The weld tip remover according to any one of claims 1 to 3, wherein the inclined guide groove includes a first region parallel to a circumference direction of the cylindrical tubular case and a second region inclined with respect to the circumference direction of the cylindrical tubular case.

## Patentansprüche

1. Schweißkappenentferner, umfassend:
ein zylindrisches rohrförmiges Gehäuse mit einer darin entlang eines Umfangs einer Rohrwand ausgebildeten geneigten Führungsnut;
eine Drehplatte, die in dem zylindrischen rohrförmigen Gehäuse durch eine Führungsstange axial drehbar gelagert ist, die an deren äußerer Umfangsfläche vorgesehen und in die geneigte Führungsnut eingesetzt ist und die ein Loch zur Kappenaufnahme definiert, das darin durch eine innere Umfangsfläche geformt ist; und
eine Gelenkstange mit einem Ende, das an einem Translationsaktor angelenkt ist, einem Körperabschnitt, der an einer Seite der Drehplatte angelenkt ist, und einem anderen Ende, an dem eine Antriebsbacke vorgesehen ist, die an einer Seite einer inneren Umfangsfläche der Drehplatte freiliegt.

2. Schweißkappenentferner nach Anspruch 1, aufweisend einen ersten Schweißkappenentferner nach Anspruch 1 als eine erste Vorrichtung und einen zweiten Schweißkappenentferner nach Anspruch 1 als eine zweite Vorrichtung,
wobei die erste und die zweite Vorrichtung einander in einer axialen Richtung überlappen,
wobei eine geneigte Führungsnut der ersten Vorrichtung und eine geneigte Führungsnut der zweiten Vorrichtung in entgegengesetzte Richtungen geneigt sind, und ein Ende einer Gelenkstange der ersten Vorrichtung und ein Ende einer Gelenkstange der zweiten Vorrichtung an demselben Translationsaktor angelenkt sind.

3. Schweißkappenentferner nach Anspruch 1, aufweisend einen ersten Schweißkappenentferner nach Anspruch 1 als eine erste Vorrichtung und einen zweiten Schweißkappenentferner nach Anspruch 1 als eine zweite Vorrichtung,
wobei die erste und die zweite Vorrichtung nebeneinander senkrecht zu einer axialen Richtung angeordnet sind,
wobei eine geneigte Führungsnut der ersten Vorrichtung und eine geneigte Führungsnut der zweiten Vorrichtung in entgegengesetzte Richtungen geneigt sind, und ein Ende einer Gelenkstange der ersten Vorrichtung und ein Ende einer Gelenkstange der zweiten Vorrichtung an demselben Translationsaktor angelenkt sind.

4. Schweißkappenentferner nach einem der Ansprüche 1 bis 3, zudem aufweisend:
ein Blockstück, das durch die Drehung der Drehplatte antreibbar und dazu eingerichtet ist, zumindest einen Teil eines Randes des Lochs zur Kappenaufnahme an einem Ende in einer axialen Richtung des zylindrischen rohrförmigen Gehäuses blockiert.

5. Schweißkappenentferner nach einem der Ansprüche 1 bis 3, wobei die geneigte Führungsnut einen ersten Bereich parallel zu einer Umfangsrichtung des zylindrischen rohrförmigen Gehäuses und einen zweiten Bereich, der in Bezug auf die Umfangsrichtung des zylindrischen rohrförmigen Gehäuses geneigt ist, aufweist.

## Revendications

1. Dispositif d'enlèvement de capuchons de soudage comprenant
un boîtier tubulaire cylindrique avec une rainure de guidage inclinée formée à l'intérieur le long d'une circonférence d'une paroi du tube ;
un plateau rotatif monté axialement à l'intérieur du boîtier tubulaire cylindrique par une barre de guidage située sur sa surface circonférentielle extérieure et insérée dans la rainure de guidage inclinée, et définissant un trou de réception du capuchon formé à travers sa surface circonférentielle intérieure ; et
une barre de charnière ayant une extrémité reliée à un actionneur de translation, une partie du corps reliée à un côté du plateau rotatif, et une autre extrémité à laquelle une mâchoire d'entraînement exposée à un côté de la surface circonférentielle intérieure du plateau rotatif est fournie.

2. Dispositif selon la revendication 1, comprenant un premier dispositif d'enlèvement de capuchons selon la revendication 1 comme premier dispositif et un second dispositif d'enlèvement de capuchons selon la revendication 1 comme second dispositif,
le premier et le second dispositif se chevauchant dans une direction axiale,
une rainure de guidage inclinée du premier dispositif et une rainure de guidage inclinée du second dispositif étant inclinées dans des directions opposées, et une extrémité d'une barre de charnière du premier dispositif et une extrémité d'une barre de charnière du second dispositif étant articulées sur le même actionneur de translation.

3. Dispositif selon la revendication 1, comprenant un premier dispositif d'enlèvement de capuchons selon la revendication 1 comme premier dispositif et un second dispositif d'enlèvement de capuchons selon la revendication 1 comme second dispositif,
le premier et le second dispositif étant disposés côte à côte dans une direction perpendiculaire à une direction axiale,
une rainure de guidage inclinée du premier dispositif et une rainure de guidage inclinée du second dispositif étant inclinées dans des directions opposées, et une extrémité d'une barre de charnière du premier dispositif et une extrémité d'une barre de charnière du second dispositif étant articulées sur le même actionneur de translation.

4. Dispositif selon l'une quelconque des revendications 1 à 3, comprenant en outre
une pièce de blocage entraînée par la rotation du plateau rotatif et configurée pour bloquer au moins une partie d'un bord du trou de réception du capuchon à une extrémité dans une direction axiale du boîtier tubulaire cylindrique.

5. Dispositif selon l'une quelconque des revendications 1 à 3, dans lequel la rainure de guidage inclinée comporte une première région parallèle à la direction de la circonférence du boîtier tubulaire cylindrique et une deuxième région inclinée par rapport à la direction de la circonférence du boîtier tubulaire cylindrique.
